# EUROPEAN PATENT SPECIFICATION

(11) **EP 2 945 489 B1**
(45) Date of publication and mention of the grant of the patent: **08.03.2023**
(21) Application number: 14740328.1
(22) Date of filing: 15.01.2014
(51) Int. Cl.: A23C 9/13

(54) **METHOD FOR IMPROVING VISCOSITY, SOLUBILITY, AND PARTICLE SIZE OF MILK PROTEIN CONCENTRATES**
VERFAHREN ZUR ERHÖHUNG DER VISKOSITÄT, LÖSLICHKEIT UND PARTIKELGRÖSSE VON MILCHPROTEINKONZENTRATEN
PROCÉDÉ POUR AMÉLIORER LA VISCOSITÉ, LA SOLUBILITÉ ET LA GRANULOMÉTRIE DE CONCENTRÉS PROTÉIQUES DU LAIT

(30) Priority: 15.01.2013 US 201361752957 P
(43) Date of publication of application: 25.11.2015
(73) Proprietor: Glanbia Nutritionals Limited, Kilkenny R95 E866 (IE)
(72) Inventor: PETERSEN, Brent, Twin Falls, ID 83301 (US); WARD, Loren, Twin Falls, ID 83301 (US)
(74) Representative: Dehns
(86) International application number: PCT/US2014/011726
(87) International publication number: WO 2014/113499

(56) References cited:
- EP-A1- 1 254 601
- EP-A1- 1 749 447
- EP-B1- 1 206 192
- WO-A1-00/32055
- WO-A1-97/01961
- WO-A1-2005/013710
- US-A- 5 907 031
- US-A1- 2006 228 463
- US-A1- 2011 008 455
- US-A1- 2011 233 469
- US-B1- 6 383 533
- US-B1- 6 416 797
- US-B2- 7 267 831
- US-B2- 7 504 119
- US-B2- 8 349 294
- DATABASE WPI Week 200731 Thomson Scientific, London, GB; AN 2007-318849 XP002756979, & JP 2007 104905 A (AJINOMOTO KK) 26 April 2007 (2007-04-26)
- ERCILI-CURA; D.: 'Structure modification of milk protein gels by enzymatic cross-linking.' THESIS FOR THE DEGREE OF DOCTOR OF FOOD SCIENCES OF VTT TECHNICAL RESEARCH CENTER OF FINLAND 2012, page 24, XP055268836 Retrieved from the Internet: <URL:http://www.vtt.fi/inf/pdf/ science /2012/S24.pdf>

## Description

### Field of the Invention

The invention relates to methods for improving viscosity, solubility and particle size of milk proteins. More specifically, the invention relates to methods for using enzymes to improve viscosity, solubility and particle size of milk protein concentrates and milk protein isolates.

### Background of the Invention

Whey protein compositions are popular for use in a variety of foods, beverages, and supplements because they are complete proteins, containing all the amino acids necessary for human nutrition. Whey protein has the highest biological value (i.e., efficiency of use) of any protein. The biological value of whey protein, for example, is 104, while the biological values of eggs, soy protein, and wheat are 100, 74, and 54, respectively. Whey proteins are particularly desirable for protein-enriched beverages because they are less viscous when solubilized in water or other aqueous formulations, such as beverages containing milk or water. In fact, whey is the standard for viscosity at pH 6-7.5. Products made using whey proteins are generally experienced by the consumer as having a smoother taste (i.e., they are less "gritty"). Whey proteins are generally produced as a by-product of cheese manufacturing. Therefore, the availability of whey protein concentrate and whey protein isolate, the two forms of whey protein most commonly used in the food, beverage, and supplement industries, may be contingent upon the demand for cheese. Because the popularity of whey protein concentrates and whey protein isolates as food and beverage ingredients, as well as supplements, has increased significantly in the past few years, the industry has reached a point at which the supply of the protein is limited, relative to the demand. EP 1254601 describes a process for making a cheese product using transglutaminase to crosslink at least a portion of proteins to from a curd. WO 00/32055 describes methods for use and preparation of an opacifying agent for beverages such as milk. Transglutaminase is used to produce crosslinked caseinate. WO 2005/013710 describes a milk protein composition with a high percentage of whey protein prepared by heating, adding transglutaminase, heating, coagulating and drying. EP1749447 describes a method for yoghurt production utilizing transglutaminase. JP 2007104905 describes preparation of dairy products by adding transglutaminase to milk which causes it to emulsify. US 7504119 describes a process for producing cheese curd involving adding transglutaminase to milk. http://www.vtt.fi/inf/pdf/science/2012/S24.pdf discloses structure modification of milk protein by enzymatic cross linking. US 7267831 discloses a method of making a processed cheese with improved firmness comprising mixing a protein cross-linking enzyme and optionally other ingredients with a cheese material with a pH of less than 5.6, a moisture content of less than 60% and preferably one or more coagulating agents. US 5907031 describes a process in which a solution of milk whey protein is reacted with transglutaminase, heated and dried. US 6416797 discloses a process for making cream cheese utilizing acidifying and cross-linking to process a dairy liquid into wheyless cream cheese by utilizing the protein cross-linking activity of transglutaminase.

What are needed are compositions that are more readily available and less dependent upon the production of another food product, while providing the desirable ingredient properties that are associated with whey protein.

### Summary of the Invention

The present invention relates to a method for decreasing viscosity, increasing solubility and decreasing particle size of milk proteins, the method comprising admixing milk protein with at least one transglutaminase by adding at least one transglutaminase to a product selected from the group consisting of skim milk and reconstituted skim milk and combinations thereof, and concentrating the protein in the presence of the transglutaminase in its active state, wherein the step of concentrating the protein is performed using a method selected from the group consisting of reverse osmosis, filtration, ultrafiltration, microfiltration, evaporation and combinations thereof. In various aspects, the method of the invention may be performed by the steps of adding at least one transglutaminase to skim or whole milk or combinations thereof; concentrating the protein of the skim or whole milk by a method selected from the group consisting of reverse osmosis, filtration, ultrafiltration, microfiltration, evaporation, and combinations thereof; and performing a drying step comprising spray-drying the concentrated protein without inactivating the transglutaminase prior to the drying step. In other aspects, the step of adding the at least one transglutaminase is performed after the protein is concentrated, such as by the steps of admixing a concentrated milk protein product with at least one transglutaminase, and drying the concentrated milk protein product and transglutaminase admixture without first inactivating the transglutaminase. Aspects of the method of the invention also include performing the steps of treating the protein or filtering the protein in an in-line system, whereby the step of spray-drying is performed immediately following treatment/filtration or filtration/treatment by feeding the enzyme-treated protein into the spray dryer directly from either a filtration or a treatment chamber, depending upon whether the transglutaminase is added pre- or post-concentration.

Aspects of the invention also include rehydrating dried milk protein concentrate milk protein isolate, or a combination thereof, adding transglutaminase to the rehydrated MPC and/or MPI, and co-drying the transglutaminase with the MPC and/or MPI.

### Brief Description of the Drawings

Fig. 1 is a photograph of five MPC products, the first (far left) being a product treated using the method of the invention, and the other four being products treated by standard methods currently available for commercial products. As shown in the photograph, MPC treated by the method of the invention does not separate as readily, but retains its superior solubility during storage after addition to liquid.
Fig. 2 is a graph illustrating the differences in viscosity of MPC produced by the method of the invention ("D" in the graph) as compared to that of commercially-available MPCs.
Fig. 3 is a graph of viscosity of the reaction mix measured at hourly time points for a product produced by the method of the invention.

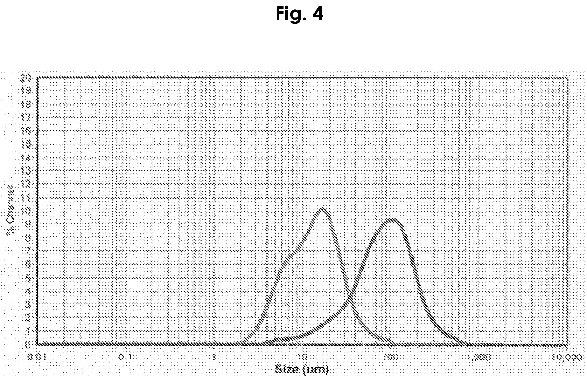

Fig. 4 is a comparison plot of the particle size of MPC produced by the method of the invention (first peak) and the same MPC without treatment (second peak).

### Detailed Description

Milk protein concentrates (MPC) and milk protein isolates (MPI) are generally isolated from whole or skim milk, and are commercially available, as are whey protein concentrates (WPC) and whey protein isolates (WPI). MPCs contain both casein and whey proteins, and have been proposed as good substitutes for whey protein in the various foods, beverages, and supplements in which whey has been used. However, although they may exhibit acceptable solubility, they tend to produce a more viscous solution when they are mixed with water than do many of the whey protein compositions such as WPCs and WPIs. Whey protein generally sets the acceptable standard for viscosity.

Milk protein concentrates that contain 80% protein (MPC80) or higher have exhibited poor solubility when reconstituted into water, which restricts their use in food applications. Furthermore, because of the larger particle sizes in MPC/MPI, they may produce a gritty texture when used as an ingredient for beverages, an obvious disadvantage in meeting consumer preferences for smooth-tasting formulations. "Addition of NaCl during the diafiltration process can modify the strength of hydrophobic interactions and sulfhydryl-disulfide interchange reactions and thereby affect protein aggregation and the solubility of MPC powders" (Mao, X.Y. et al., Effect of NaCl addition during diafiltration on the solubility, hydrophobicity, and disulfide bonds of 80% milk protein concentrate powder, Journal of Dairy Science, July 2012, Volume 95, Issue 7 , Pages 3481-3488), but the addition of salt into a food product or its processing is not an attractive option if another cost-effective, safe option is available. Furthermore, the addition of ingredients such as vitamins and minerals, for example, may interfere with the salt treatment, excluding it as an option for the preparation of a variety of desirable MPC products.

The inventors have developed a method for decreasing viscosity, increasing solubility and decreasing particle size of milk proteins (significantly reducing the gritty taste and producing a smooth-tasting beverage, for example) for MPC/MPI so that it can be readily used as a food, beverage, and/or supplement ingredient as WPC/WPI have been. MPC/MPI substitution for WPC/WPI in a food product, for example, has been estimated to reduce the cost of producing the product by about twelve percent. Therefore, the invention also provides a method for producing an ingredient having the desirable properties of whey protein while decreasing the cost of production of the products into which it is incorporated.

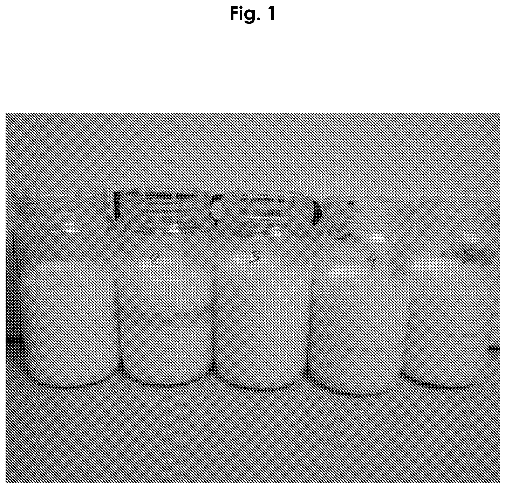

In the method of the invention, whole or skim milk (the starting product of traditional MPC/MPI production) is treated with at least one transglutaminase. Preferably, this is done prior to performing further processing steps, as shown in Fig. 1, but the enzyme treatment may also be performed after the processing steps which result in concentration of the protein have been performed. The processing steps which are used are generally those which may normally be used to concentrate the protein (e.g., various types of filtration), but in this method the protein is concentrated in the presence of the active transglutaminase, or the concentrated protein is treated with active transglutaminase and the protein/active transglutaminase are co-dried by a method such as spray-drying, for example, rather than treating the milk for a period of time, as has previously been described by Czernicka et al. (Czernicka, M. et al. Functional Properties of Milk Proteins Modified by Transglutaminase Depending on Incubation Conditions with the Enzyme. Biotechnology in Animal Husbandry 25 (5-6), p 737-743, 2009). It should be apparent to one of skill in the art that when the transglutaminase is added to the protein by adding it to whole or skim milk, then processing to concentrate the protein, the transglutaminase will also be concentrated. By treating the concentrated protein in this way, the resulting MPC/MPI particle size may be decreased and the resulting aqueous formulation, such as a beverage, into which the MPC/MPI is added as an ingredient is less viscous and has a smoother taste. The inventors have also discovered that transglutaminase treatment of milk produces a whiter MPC/MPI powder and decreases the viscosity of a concentrated skim milk protein, making it easier to filter the product to higher solids for spray drying. This allows the manufacturer to change the bulk density of the final powder and lower the cost of spray drying.

As used herein, the term "feeding directly" refers to moving an ingredient or product from a first chamber which is fluidly or otherwise operably connected to a second chamber. Preferably, the first chamber and second chamber will not be separated by an intervening chamber or there is no significant process which is performed in the time interval between the time when a process is performed in the first chamber and a process is performed in the second chamber. "Immediately following" refers to a next step or process performed without undue delay, or without any intentional delay. "Decreasing particle size of milk proteins" includes decreasing dry and/or hydrated particle size, decreasing the size of hydrated particles contributing significantly to the absence of a gritty mouth feel. "Reconstituting" includes, and preferably comprises, partially reconstituting-that is, rehydrating, while maintaining a protein product in its more concentrated state.

Transglutaminase treatment of proteins may result in both intra-molecular and inter-molecular cross-linking. While not being bound by theory, the inventors believe that the method shifts the Michaelis-Menten kinetics of the enzyme reaction and, especially if the method is performed at a pH of from about 6 to about 7.5, promotes more intra-molecular crosslinking of the proteins. This results in a decreased particle size as the proteins are folded more tightly. The present method of use for transglutaminase in the dairy industry generally involves treatment of milk proteins in solution, such as treatment of whole or skim milk, followed by inactivation of the enzyme (see, for example, Guyot, C. and U. Kulozik, Effect of transglutaminase-treated milk powders on the properties of skim milk yoghurt," Int. Dairy J. 21 (2011), 628-635). This tends to result in a product with increased viscosity, which would be expected when inter-molecular cross-links are formed. By modifying the conditions under which the transglutaminase treatment is performed, the inventors believe that they have enabled the formation of more intra-molecular crosslinks, producing smaller particle size, decreased viscosity, and significantly increasing the solubility of milk protein concentrates of from about 70 to about 85 percent (MPC70, MPC80, for example).

Transglutaminases may be obtained from microbial fermentation processes and other sources, and are readily available commercially. Transglutaminases catalyze the post-translational modification of proteins by transamidation of available glutamine residues, resulting primarily in the formation of epsilon-(gamma-glutamyl)lysine cross-links. Tranglutaminases have been used to treat emulsions containing proteins to produce gelatinous, cross-linked gels (Japanese Patent Number 59059151). They have been used to produce cheese (see WO 1997/01961, for example). They have also been used to treat protein solutions to produce yogurt, jelly, and gel cosmetics. However, the commonality in all these processes is the increased viscosity/gelling that is expected to occur when transglutaminase is added. Given the fact that the function of transglutaminase is to cross-link proteins to form intra-molecular and/or inter-molecular crosslinks, and the fact that transglutaminase has traditionally been used for the purposes previously noted, it would therefore seem counterintuitive that addition of transglutaminase during production of a dairy ingredient would produce a product that would have a smaller particle size and be described as less viscous, but when used in the method of the present invention, that is the result that is produced. Furthermore, others have reported that treatment of skim milk powder (MPC) can be treated with transglutaminase to produce a product that can be added to yogurt to increase its viscosity (Guyot, C. and U. Kulozik, Effect of transglutaminase-treated milk powders on the properties of skim milk yoghurt," Int. Dairy J. 21 (2011), 628-635). The inventors have discovered that if the process to produce transglutaminase-treated MPC is modified, that modification results in a product that produces reduced viscosity, rather than increased viscosity, in the products into which it is admixed. This is a significant advance in the field of dairy processing and is especially useful for the addition of MPC into various liquids, such as beverages.

Ultrafiltration is a preferred method for producing MPCs, but they may also be produced by precipitating the proteins out of milk or by dry-blending the milk proteins with other milk components. The method of the invention may be performed by adding at least one transglutaminase to whole or skim milk prior to the selected process that will result in concentration of the protein, then spray-drying the concentrated milk protein (MPC) in the presence of the active transglutaminase to produce an MPC powder that exhibits better solubility, decreased particle size (and therefore decreased gritty mouthfeel), and decreased viscosity when admixed to form an aqueous solution. The method of the invention may also be described as admixing reconstituted milk protein concentrate with at least one active transglutaminase prior to spray-drying the protein in the presence of the active transglutaminase. In various aspects of the invention, the step of treating a milk protein concentrate is performed by adding at least one transglutaminase to skim or whole milk, then concentrating the protein by a method including reverse osmosis, filtration, ultrafiltration, evaporation, or a combination thereof, followed by spray-drying the concentrated protein. In this aspect of the method, the milk protein is concentrated in the presence of at least one active transglutaminase and under temperature conditions suitable for the continued action of the enzyme on the protein during and after concentration, thereby treating the milk protein in its more concentrated form. In other aspects, the step of adding the at least one transglutaminase is performed after the protein is concentrated and before it is dried. Concentrated milk protein product is derived from at least one product selected from the group consisting of skim milk and reconstituted skim milk and combinations thereof. Milk protein concentrate may be hydrated sufficiently to allow admixing of the protein and transglutaminase, and the admixture components may be co-dried. Aspects of the invention also include performing the steps of treating the protein or filtering the protein in an in-line system, whereby the step of spray-drying is performed immediately following treatment/filtration or filtration/treatment by feeding the enzyme-treated protein into the spray-dryer directly from either a filtration or a treatment chamber, depending upon whether the transglutaminase is added pre- or post-concentration. Another option is also contemplated by the invention, and that is rehydration of dried milk protein concentrate, followed by the addition of at least one transglutaminase to treat the rehydrated milk protein concentrate. In some aspects, this may be performed by rehydrating a dried milk protein concentrate to maintain the MPC in a significantly more concentrated form than is found in milk, adding at least one transglutaminase to the rehydrated MPC, holding the MPC/transglutaminase for a sufficient time to allow the transglutaminase to act on the MPC, then spray-drying the MPC/transglutaminase.

The inventors found that strong heat treatment after the addition of enzyme negatively affects the enzyme treatment. Therefore, it is advisable to perform any pasteurization that may be desired prior to treatment of the MPC. Incubation temperatures during enzyme treatment may vary from about 77 degrees Fahrenheit (25 degrees Celsius) to about 149 degrees Fahrenheit (65 degrees Celsius). The inventors have also discovered that results are significantly better if MPC is spray-dried immediately after treatment. That is, the treated MPC is not held in containers in a liquid form for extended periods of time, such as for a period of hours, or overnight, for example, and then dried. Making the spray-drying process a part of the on-site processing steps, preferably in an in-line manner directly from the treatment chamber, will produce superior results.

Equipment, equipment set-up, and methods for accomplishing the method of the invention, given the disclosure provided here by the inventors, are known to those of skill in the art. For example, it is well within the skill of on in the art of dairy processing to utilize various means, such as filtration, to concentrate milk proteins by removing the liquid and, preferably, lactose. Techniques such as microfiltration would generally not be used, however, unless it would be desired by the processor to filter out whey proteins. Spray-drying is frequently mentioned herein, but those of skill in the art may utilize other drying methods known to those in the industry, particularly those which produce more rapid drying effects.

### Examples

### Production of MPC from Milk:

Milk was run through a fat separator to remove fat and produce skim milk. The skim milk was collected into a tank and warmed to 104°F (40 °C). Transglutaminase (2.5 g/gallon (2.5 g/4.5 litres)of milk) was added and the enzyme treatment was allowed to proceed for 4 hours by holding the skim milk at 104°F (40 °C)during this time. The skim milk was then heat-treated and subjected to ultrafiltration (UF) to produce a milk protein concentrate (UF-MPC). The UF-MPC was then subjected to further filtration to produce a filtered MPC (F-MPC), and the F-MPC was spray-dried. Spray-drying was done in-line, without the presence of holding tanks or holding the F-MPC for a period of time prior to sending it to the spray-dryer.

The resulting product was admixed with water and allowed to sit for about 30 minutes. Four MPCs currently on the market were also individually admixed with water and allowed to sit for the same period of time, as comparison. Results are shown in Fig. 1, where it can clearly be seen that each of the four currently-available products, which are not produced by the method of the invention, exhibited some separation of contents of the aqueous solutions.

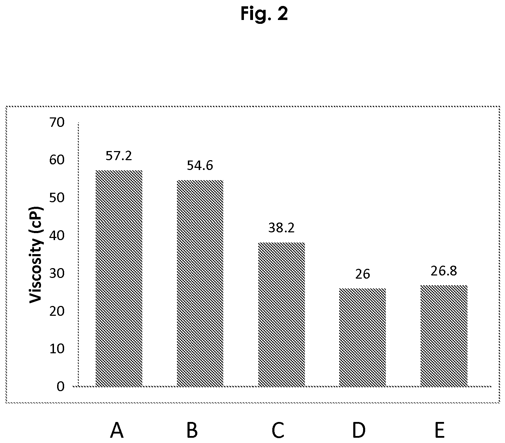

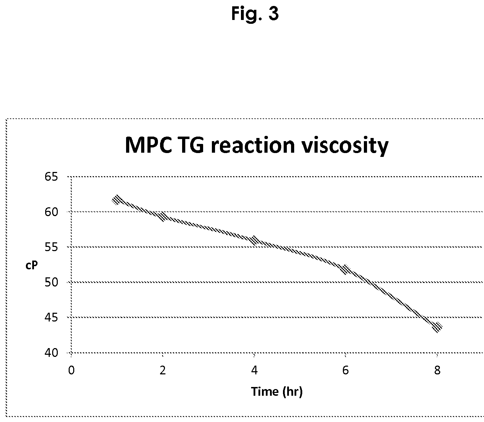

Viscosity of the reaction mix was measured at hourly time points. Results are shown in Table 1 and Fig. 3. Viscosity of MPC produced by the method of the invention ("D" in Table 2) was compared to that of commercially-available MPCs, and results are shown below in Table 2 and in Fig. 2.

**Table 1**

| **Viscosity at Hourly Time Points** | |
|---|---|
| **Time (hours)** | **Viscosity (mPa.s.)** |
| **1** | **61.7** |
| **2** | **59.3** |
| **4** | **55.9** |
| **6** | **51.8** |
| **8** | **43.6** |

**Table 2**

| **MPC Products Viscosity Test Results** | | |
|---|---|---|
| **Product** | **Viscosity (mPa.s)** | **Temperature** |
| **A** | **57.2** | **58 °F (14.4 °C)** |
| **B** | **54.6** | **60 °F (15.5 °C)** |
| **C** | **38.2** | **60 °F (15.5 °C)** |
| **D** | **26** | **60 °F (15.5 °C)** |
| **E** | **26.8** | **59 °F (15 °C)** |

## Claims

1. A method for decreasing viscosity, increasing solubility and decreasing particle size of milk proteins, the method comprising:
a) admixing milk protein with at least one transglutaminase by adding at least one transglutaminase to a product selected from the group consisting of skim milk and reconstituted skim milk and combinations thereof; and
b) concentrating the milk protein in the presence of the transglutaminase in its active state, wherein the step of concentrating the protein is performed using a method selected from the group consisting of reverse osmosis, filtration, ultrafiltration, microfiltration, evaporation, and combinations thereof.

2. The method of claim 1 further comprising the step of drying the concentrated protein.

3. The method of claim 2 wherein the step of drying the concentrated protein is performed by spray-drying.

4. The method of claim 2 wherein the drying step is performed without inactivating the transglutaminase prior to the drying step.

5. The method of claim 1 wherein the step of concentrating the protein is performed under temperature conditions suitable for the continued action of the enzyme on the protein during and after concentration.

6. A method for decreasing viscosity, increasing solubility and decreasing particle size of milk proteins, the method comprising the steps of:
a) concentrating milk protein from at least one product selected from the group consisting of skim milk and reconstituted skim milk and combinations thereof, using a method selected from the group consisting of reverse osmosis, filtration, ultrafiltration, microfiltration, evaporation, and combinations thereof to form a concentrated milk protein product;
b) admixing the concentrated milk protein product with at least one transglutaminase; and
c) drying the concentrated milk protein product and transglutaminase admixture without first inactivating the transglutaminase.

7. The method of claim 6 wherein the step of drying the concentrated milk protein product and transglutaminase is performed by spray-drying.

8. The method of claim 7 wherein the step of spray-drying is performed immediately after admixing the concentrated milk protein product with at least one transglutaminase.

## Patentansprüche

1. Verfahren zum Verringern der Viskosität, Erhöhen der Löslichkeit und Verringern der Teilchengröße von Milchproteinen, wobei das Verfahren Folgendes umfasst:
a) Beimischen von Milchprotein mit mindestens einer Transglutaminase durch Zugeben mindestens einer Transglutaminase zu einem Produkt, ausgewählt aus der Gruppe bestehend aus Magermilch und rekonstituierter Magermilch und Kombinationen davon; und
b) Konzentrieren des Milchproteins in Gegenwart der Transglutaminase in ihrem aktiven Zustand, wobei der Schritt des Konzentrierens des Proteins unter Verwendung eines Verfahrens durchgeführt wird, das ausgewählt ist aus der Gruppe bestehend aus Umkehrosmose, Filtration, Ultrafiltration, Mikrofiltration, Verdampfung und Kombinationen davon.

2. Verfahren nach Anspruch 1, weiter umfassend den Schritt des Trocknens des konzentrierten Proteins.

3. Verfahren nach Anspruch 2, wobei der Schritt des Trocknens des konzentrierten Proteins durch Sprühtrocknen durchgeführt wird.

4. Verfahren nach Anspruch 2, wobei der Trocknungsschritt durchgeführt wird, ohne die Transglutaminase vor dem Trocknungsschritt zu inaktivieren.

5. Verfahren nach Anspruch 1, wobei der Schritt des Konzentrierens des Proteins unter Temperaturbedingungen durchgeführt wird, die für die fortgesetzte Wirkung des Enzyms auf das Protein während und nach der Konzentrierung geeignet sind.

6. Verfahren zum Verringern der Viskosität, Erhöhen der Löslichkeit und Verringern der Teilchengröße von Milchproteinen, wobei das Verfahren die folgenden Schritte umfasst:
a) Konzentrieren von Milchprotein aus mindestens einem Produkt, das ausgewählt ist aus der Gruppe bestehend aus Magermilch und rekonstituierter Magermilch und Kombinationen davon, unter Verwendung eines Verfahrens, das ausgewählt ist aus der Gruppe bestehend aus Umkehrosmose, Filtration, Ultrafiltration, Mikrofiltration, Verdampfung und Kombinationen davon, um ein konzentriertes Milcheiweißprodukt zu bilden;
b) Beimischen des konzentrierten Milchproteinprodukts mit mindestens einer Transglutaminase; und
c) Trocknen der Mischung aus konzentriertem Milchproteinprodukt und Transglutaminase, ohne zuerst die Transglutaminase zu inaktivieren.

7. Verfahren nach Anspruch 6, wobei der Schritt des Trocknens des konzentrierten Milchproteinprodukts und der Transglutaminase durch Sprühtrocknen durchgeführt wird.

8. Verfahren nach Anspruch 7, wobei der Schritt des Sprühtrocknens unmittelbar nach dem Mischen des konzentrierten Milchproteinprodukts mit mindestens einer Transglutaminase durchgeführt wird.

## Revendications

1. Procédé pour diminuer la viscosité, augmenter la solubilité et diminuer la taille de particules des protéines de lait, le procédé comprenant les étapes consistant à :
a) mélanger des protéines de lait avec au moins une transglutaminase en ajoutant au moins une transglutaminase à un produit choisi dans le groupe consistant en du lait écrémé et du lait écrémé reconstitué et des combinaisons de ceux-ci ; et
b) concentrer la protéine de lait en présence de la transglutaminase dans son état actif, dans lequel l'étape de concentration de la protéine est réalisée en utilisant une méthode choisie dans le groupe consistant en l'osmose inverse, la filtration, l'ultrafiltration, la microfiltration, l'évaporation et des combinaisons de celles-ci.

2. Procédé selon la revendication 1 comprenant en outre l'étape de séchage de la protéine concentrée.

3. Procédé selon la revendication 2 dans lequel l'étape de séchage de la protéine concentrée est effectuée par séchage par pulvérisation.

4. Procédé selon la revendication 2 dans lequel l'étape de séchage est réalisée sans inactiver la transglutaminase avant l'étape de séchage.

5. Procédé selon la revendication 1 dans lequel l'étape de concentration de la protéine est réalisée sous des conditions de température appropriées pour l'action continue de l'enzyme sur la protéine pendant et après la concentration.

6. Procédé pour diminuer la viscosité, augmenter la solubilité et diminuer la taille de particules des protéines de lait, le procédé comprenant les étapes consistant à :
a) concentrer les protéines de lait d'au moins un produit choisi dans le groupe consistant en du lait écrémé et du lait écrémé reconstitué et des combinaisons de ceux-ci, en utilisant un procédé choisi dans le groupe consistant en l'osmose inverse, la filtration, l'ultrafiltration, la microfiltration, l'évaporation et des combinaisons de ceux-ci pour former un produit concentré de protéines de lait ;
b) mélanger le produit concentré à base de protéines de lait avec au moins une transglutaminase ; et c) sécher le produit concentré à base de protéines de lait et le mélange de transglutaminase sans inactiver au préalable la transglutaminase.

7. Procédé selon la revendication 6 dans lequel l'étape de séchage du produit de protéine de lait concentré et de la transglutaminase est réalisée par séchage par pulvérisation.

8. Procédé selon la revendication 7 dans lequel l'étape de séchage par pulvérisation est effectuée immédiatement après le mélange du produit de protéine de lait concentré avec au moins une transglutaminase.
